# FASCICULE DE BREVET EUROPEEN

(11) **EP 3 856 559 B1**
(45) Date de publication et mention de la délivrance du brevet: **09.11.2022**
(21) Numéro de dépôt: 19795251.8
(22) Date de dépôt: 16.09.2019
(51) Int. Cl.: B60K 37/06, B60K 35/00

(54) **DISPOSITIF D'AFFICHAGE À ÉCRAN TACTILE AFFICHANT DANS DES ZONES INDÉPENDANTES DES PAGES D'IMAGETTES ASSOCIÉES À DES FONCTIONNALITÉS D'UN VÉHICULE**
ANZEIGEVORRICHTUNG MIT BERÜHRUNGSEMPFINDLICHEM SCHIRM, WELCHE IN UNABHÄNGIGEN BEREICHEN MINIATURANSICHTSSEITEN ANZEIGT, DIE MIT FAHRZEUGFUNKTIONEN VERKNÜPFT SIND
TOUCH SCREEN DISPLAY DEVICE DISPLAYING IN INDEPENDENT AREAS MINIATURE VIEW PAGES ASSOCIATED WITH VEHICLE FUNCTIONS

(30) Priorité: 28.09.2018 FR 1858961
(43) Date de publication de la demande: 04.08.2021
(73) Titulaire: PSA Automobiles SA, 78300 Poissy (FR)
(72) Inventeur: DUQUEROY, Michael, 91430 Vauhallan (FR); BAILLY, Aurélien, 93100 Montreuil (FR); MBABAZI, Naila, 75014 Paris 14 (FR); BARROSO, Nicolas, 77580 Guerard (FR); DELAVIER, Clotilde, 92380 Garches (FR); POGNON, Jean Luc, 92800 Puteaux (FR)
(86) Numéro de dépôt international: PCT/FR2019/052143
(87) Numéro de publication internationale: WO 2020/065173

(56) Documents cités:
- EP-A1- 3 456 576
- WO-A1-2016/066258
- US-A1- 2013 241 720

## Description

L'invention concerne les dispositifs d'affichage qui sont destinés à être installés dans un habitacle de véhicule.

Certains véhicules, généralement de type automobile, comprennent un habitacle pouvant accueillir au moins un passager, et assurent des fonctionnalités qui peuvent être contrôlées via l'écran tactile d'un dispositif d'affichage, par exemple installé dans ou sur la planche de bord.

Actuellement, l'écran tactile affiche une page d'accueil comportant des imagettes (ou vignettes (ou encore « widgets »)) qui sont représentatives de fonctionnalités, assurées par le véhicule et contrôlables par le conducteur ou le passager, et de commandes de ces fonctionnalités.

Le nombre de fonctionnalités assurées par un véhicule, généralement automobile, ne cesse d'augmenter. Or, plus le nombre de fonctionnalités contrôlables par les passagers (généralement avant) est grand, plus le nombre d'imagettes contenues dans une page affichée peut être grand, et donc plus il devient difficile et long de déterminer rapidement l'imagette que l'on veut toucher. En outre, plus la taille de l'écran est petite, plus la recherche d'imagette est difficile et longue, à nombre d'imagettes constant. De plus, plus la recherche d'imagette est longue, plus elle est dangereuse lorsqu'elle est effectuée par le conducteur du véhicule, du fait qu'elle nécessite qu'il regarde l'écran tactile et donc qu'il cesse d'observer l'environnement devant son véhicule pendant toute sa durée.

Afin de réduire le nombre d'imagettes contenues dans une page affichée deux solutions ont été envisagées. Une première solution consiste à augmenter le nombre d'écrans tactiles et à afficher des pages contenant des nombres restreints d'imagettes différentes sur les différents écrans tactiles. Cette première solution s'avère onéreuse et encombrante et complexifie le contrôle de l'affichage global. Une seconde solution consiste à augmenter notablement le nombre de pages pouvant être affichées, tout en diminuant le nombre d'imagettes contenues dans chacune des pages. Cette seconde solution facilite la recherche d'une imagette au sein d'une page, mais elle impose une navigation, parfois longue, entre les pages, ce qui peut s'avérer chronophage et fastidieux, voire peut être la cause d'un énervement. En outre, lorsque l'on passe d'une page à une autre, on fait disparaître de l'écran la totalité des imagettes qui étaient affichées, alors que généralement on ne fait que chercher une nouvelle imagette particulière, ce qui empêche l'accès à toutes les autres imagettes initialement affichées.

Il est également possible dans certains véhicules que les passagers reconfigurent une page affichée en fonction de leurs besoins et/ou habitudes personnel(le)s. Cependant, ce type de reconfiguration est rarement simple ou intuitif et/ou rapide à réaliser par une personne qui n'en n'a pas l'habitude, nécessite souvent plusieurs modifications, et s'avère peu ergonomique du fait de la position penchée que doit prendre l'usager. Par conséquent, l'option de reconfiguration des pages est généralement très peu utilisée.

On connait par le document US20130241720 un procédé et des systèmes pour une console de véhicule configurable pouvant comprendre un ou plusieurs affichages qui sont capables de recevoir une entrée d'un utilisateur. Il est prévu que chacun ou plusieurs des affichages de la console puissent être configurés pour présenter une pluralité d'applications personnalisées qui, lorsqu'elles sont manipulées par au moins un utilisateur, sont adaptées pour contrôler des fonctions associées à un véhicule et/ou à un périphérique associé.

On connait aussi par le document WO2016/066258 un procédé pour faire fonctionner un système d'affichage tactile d'un véhicule à moteur, comportant les étapes suivantes: déterminer si un conducteur ou un passager du véhicule à moteur souhaite utiliser le système d'affichage; s'il est déterminé que le conducteur souhaite utiliser le système d'affichage : faire fonctionner le système d'affichage dans un premier mode de fonctionnement dans lequel une interface utilisateur graphique est affichée uniquement sur la zone d'affichage côté conducteur du système d'affichage ; s'il est déterminé que le passager du véhicule à moteur souhaite utiliser le système d'affichage : faire fonctionner le système d'affichage dans un deuxième mode de fonctionnement, dans lequel l'interface utilisateur graphique est affichée uniquement sur la zone d'affichage côté passager du système d'affichage.

On connait aussi par le document EP3456576 un dispositif de commande de véhicule pour commander un ou plusieurs affichages fournis dans un véhicule. Le dispositif de commande de véhicule comprend une unité de communication effectuant une communication avec le ou les affichages, et un processeur contrôlant, lorsqu'un événement se produit, le ou les affichages pour afficher un bouton d'accueil correspondant à l'événement à l'aide de l'unité de communication, dans lequel le bouton d'accueil est configuré pour afficher une liste d'icônes prédéfinies en réponse à un toucher appliqué au bouton d'accueil, et la liste d'icônes prédéfinies est modifiée en fonction de l'événement.

L'invention a donc notamment pour but d'améliorer la situation.

Elle propose notamment à cet effet un dispositif d'affichage selon la revendication 1, d'une part, destiné à équiper un véhicule assurant des fonctionnalités et comprenant un habitacle pouvant accueillir au moins un passager, et, d'autre part, comprenant :
- un écran de type tactile, destiné à être installé dans l'habitacle dans une zone accessible au(x) passager(s), et affichant des pages d'imagettes représentatives de ces fonctionnalités et de commandes de ces dernières, et
- au moins un calculateur déclenchant un accès à la fonctionnalité ou commande associée à une imagette touchée.

Ce dispositif d'affichage se caractérise par le fait que :
- son écran est subdivisé en au moins deux zones d'affichage voisines, et
- son calculateur contrôle l'affichage dans ces zones d'affichage de pages d'imagette(s) différentes choisies par au moins un passager par des actions dédiées respectivement sur ces zones d'affichage.

Grâce à l'invention, quand un passager change la page d'imagette(s) qui est affichée sur l'une des zones d'affichage, cela ne modifie pas les pages d'imagette(s) qui sont affichées sur les autres zones d'affichage, et donc l'usager a l'impression de disposer d'autant d'écrans indépendants qu'il y a de zones d'affichage.

Le dispositif d'affichage selon l'invention peut comporter d'autres caractéristiques qui peuvent être prises séparément ou en combinaison, et notamment :
- les actions dédiées peuvent être choisies parmi une touche ponctuelle dans une portion dépourvue d'imagette d'une sous-partie droite ou gauche d'une zone d'affichage, une touche ponctuelle dans une portion dépourvue d'imagette d'une sous-partie haute ou basse d'une zone d'affichage, un glissement horizontal d'un doigt selon un premier ou second sens dans une portion dépourvue d'imagette d'une zone d'affichage, et un glissement vertical d'un doigt selon un premier ou second sens dans une portion dépourvue d'imagette d'une zone d'affichage ;
- dans un premier mode de réalisation son écran peut être subdivisé en au moins deux zones d'affichage placées l'une à la suite de l'autre à un même niveau ;
- dans un deuxième mode de réalisation son écran peut être subdivisé en au moins deux zones d'affichage placées l'une à la suite de l'autre à des niveaux différents ;
- dans un troisième mode de réalisation son écran peut être subdivisé en au moins trois zones d'affichage, au moins l'une d'entre elles étant placée à un premier niveau, et au moins deux autres d'entre elles étant placées l'une à côté de l'autre à un second niveau situé au-dessus ou en-dessous de ce premier niveau ;
- son écran peut être subdivisé en zones d'affichage qui ont des dimensions différentes ;
- selon l'invention, en cas d'activation d'une fonctionnalité d'assistance à la conduite du véhicule et d'affichage d'une page d'imagette(s) associée à cette fonctionnalité activée sur l'une des zones d'affichage, son calculateur autorise un remplacement de cette page d'imagette(s) affichée par une autre page d'imagette(s) seulement lorsque ce remplacement est requis par une action d'un passager reconnu en tant que conducteur du véhicule ;
- en cas d'activation d'une fonctionnalité d'assistance à la conduite du véhicule gérée par un conducteur reconnu du véhicule et d'affichage d'une page d'imagette(s) associée à cette fonctionnalité activée sur l'une des zones d'affichage, son calculateur peut n'autoriser une modification d'un paramètre de cette fonctionnalité activée que par une action de ce conducteur reconnu ;
- en cas d'activation d'une fonctionnalité gérée par un passager reconnu qui n'est pas un conducteur reconnu du véhicule et d'affichage d'une page d'imagette(s) associée à cette fonctionnalité activée sur l'une des zones d'affichage, son calculateur peut autoriser une modification d'un paramètre de cette fonctionnalité activée par une action de ce conducteur reconnu seulement lorsqu'une vitesse en cours du véhicule est inférieure à un seuil prédéfini pendant que ce dernier est dans une phase de conduite manuelle.

L'invention propose également un véhicule, éventuellement de type automobile, assurant des fonctionnalités et comprenant un habitacle, pouvant accueillir au moins un passager, et au moins un dispositif d'affichage du type de celui présenté ci-avant et installé dans cet habitacle.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue du dessus, un exemple de véhicule automobile comprenant une planche de bord équipée d'un exemple de réalisation d'un dispositif d'affichage selon l'invention,
- la figure 2 illustre schématiquement, dans une vue de face, un écran présentant un premier format de type « paysage » et subdivisé en deux zones d'affichage sur lesquelles sont affichés respectivement des exemples de première et quatrième pages d'imagettes,
- la figure 3 illustre schématiquement, dans une vue de face, l'écran de la figure 2 avec sa première zone affichant désormais une deuxième page d'imagettes à la place de la première page d'imagettes,
- la figure 4 illustre schématiquement, dans une vue de face, un écran présentant un second format de type « paysage » et subdivisé en trois zones d'affichage sur lesquelles sont affichés respectivement des exemples de première, quatrième et neuvième pages d'imagettes,
- la figure 5 illustre schématiquement, dans une vue de face, un écran présentant un premier format de type « portrait » et subdivisé en deux zones d'affichage sur lesquelles sont affichés respectivement des exemples de première et quatrième pages d'imagettes,
- la figure 6 illustre schématiquement, dans une vue de face, un écran présentant un second format de type « portrait » et subdivisé en trois zones d'affichage sur lesquelles sont affichés respectivement des exemples de première, quatrième et neuvième pages d'imagettes, et
- la figure 7 illustre schématiquement, dans une vue de face, un écran présentant un troisième format et subdivisé en trois zones d'affichage réparties sur deux niveaux différents et sur lesquelles sont affichés respectivement des exemples de première, quatrième et neuvième pages d'imagettes.

L'invention a notamment pour but de proposer un dispositif d'affichage DA destiné à être installé dans un habitacle H d'un véhicule V assurant des fonctionnalités contrôlables, afin d'afficher dans des zones indépendantes des pages d'imagettes associées à ces fonctionnalités.

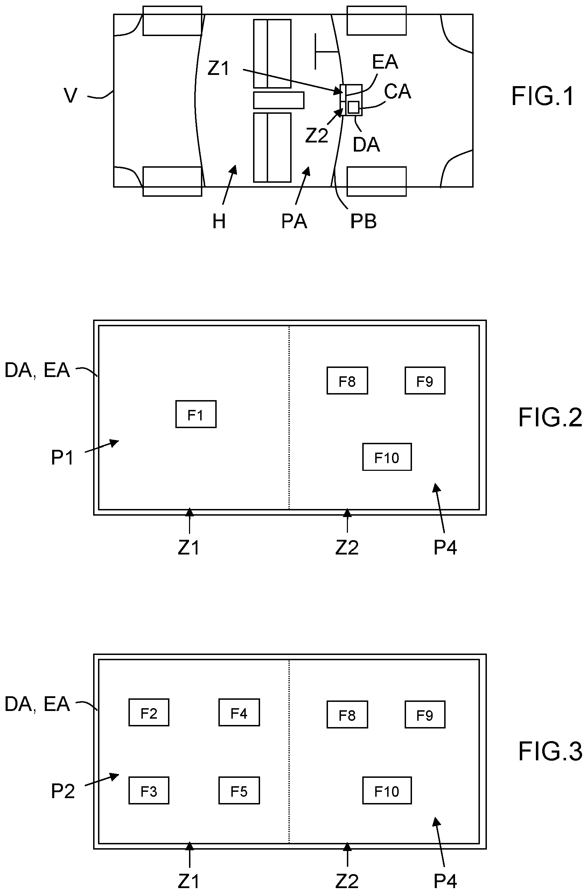

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule comprenant un habitacle pouvant accueillir au moins un passager, et assurant des fonctionnalités pouvant être contrôlées via l'écran tactile d'un dispositif d'affichage. Ainsi, l'invention concerne les véhicules terrestres, les bateaux et les aéronefs.

On a schématiquement représenté sur la figure 1 un exemple de véhicule (ici automobile) V comprenant un habitacle H, pouvant accueillir au moins un passager, et un dispositif d'affichage DA selon l'invention.

On notera que dans l'exemple illustré non limitativement sur la figure 1 l'habitacle H comprend une partie avant PA comprenant des sièges conducteur et passager situés derrière une planche de bord PB et pouvant accueillir respectivement un conducteur et un passager. Le siège conducteur est notamment associé à un volant.

On notera également que dans l'exemple illustré non limitativement sur la figure 1 le véhicule V est à conduite à gauche, et donc le siège conducteur et le volant sont installés à gauche tandis que le siège passager est installé à droite. Mais le véhicule V pourrait être à conduite à droite et dans ce cas le siège conducteur et le volant sont installés à droite tandis que le siège passager est installé à gauche.

Par ailleurs, dans l'exemple illustré non limitativement sur la figure 1 le dispositif d'affichage DA selon l'invention est installé dans ou sur la planche de bord PB du véhicule V (située devant les sièges conducteur et passager). Par exemple, ce dispositif d'affichage DA constitue ce que l'on appelle fréquemment un écran multifonction central ou afficheur central. Mais dans une variante le dispositif d'affichage DA selon l'invention pourrait être installé dans une console centrale installée dans une zone située entre les espaces d'accueil des jambes du conducteur et du passager, dans le prolongement vers l'arrière de la planche de bord PB. Dans d'autres variantes, le dispositif d'affichage DA selon l'invention pourrait être installé dans d'autres endroits de l'habitacle H, comme par exemple dans une face arrière d'un dossier de siège.

Comme illustré sur la figure 1, un dispositif d'affichage DA, selon l'invention, comprend un écran d'affichage EA, de type tactile, et au moins un calculateur CA.

L'écran (d'affichage) EA est destiné à être installé dans l'habitacle H (ici dans sa partie avant PA) dans une zone qui est accessible à au moins un passager (et ici au conducteur et au passager avant). Cet écran EA est destiné à afficher des pages d'imagettes (ou vignettes (ou encore widgets)), qui sont représentatives des fonctionnalités assurées par le véhicule V et contrôlables, et de commandes de ces fonctionnalités.

De plus, cet écran EA est subdivisé en au moins deux zones d'affichage Zj voisines. Cette subdivision peut être physique, et dans ce cas chaque zone d'affichage Zj a son propre dispositif d'adressage de pixels, ou bien purement informatique.

Le calculateur CA est agencé de manière à déclencher un accès à la fonctionnalité ou commande qui est associée à une imagette touchée par un doigt du conducteur ou du passager. De plus, ce calculateur CA contrôle l'affichage dans les zones d'affichage Zj de l'écran EA de pages d'imagette(s) Pk qui sont différentes et choisies par au moins un passager par des actions dédiées respectivement sur ces zones d'affichage Zj.

En d'autres termes, si un passager veut changer la page d'imagette(s) Pk qui est affichée sur l'une des zones d'affichage Zj, cela ne modifiera pas les pages d'imagette(s) Pk' (k' ≠ k) qui sont affichées sur les autres zones d'affichage Zj' (j' ≠ j). L'usager de l'écran EA a donc l'impression de disposer d'autant d'écrans indépendants qu'il y a de zones d'affichage Zj, puisque les affichages de ces dernières sont indépendants les uns des autres. En outre, cela confère un caractère technique et moderne au dispositif d'affichage DA et contribue à l'impression de qualité du véhicule V.

Dans l'exemple illustré non limitativement sur la figure 1 le calculateur CA est installé fixement dans un boîtier du dispositif d'affichage DA auquel est aussi solidarisé l'écran EA. Mais il pourrait être installé dans un autre endroit, distant de l'écran EA, dès lors qu'il est couplé à ce dernier (EA) pour lui transmettre des commandes d'affichage.

Par exemple, les actions dédiées, qui permettent au calculateur CA de savoir qu'un usager veut changer une page d'imagette(s) Pk qui est affichée sur l'une des zones d'affichage Zj, peuvent être choisies parmi au moins :
- une touche ponctuelle dans une portion dépourvue d'imagette d'une sous-partie droite ou gauche d'une zone d'affichage Zj. Par exemple, toucher une sous-partie droite peut signifier que l'on veut passer à la page Pk-1 qui précède la page Pk affichée, et toucher une sous-partie droite peut signifier que l'on veut passer à la page Pk+1 qui suit la page Pk affichée,
- une touche ponctuelle dans une portion dépourvue d'imagette d'une sous-partie haute ou basse d'une zone d'affichage Zj. Par exemple, toucher une sous-partie haute peut signifier que l'on veut passer à la page Pk-1 qui précède la page Pk affichée, et toucher une sous-partie basse peut signifier que l'on veut passer à la page Pk+1 qui suit la page Pk affichée,
- un glissement horizontal d'un doigt selon un premier ou second sens dans une portion dépourvue d'imagette d'une zone d'affichage Zj, et
- un glissement vertical d'un doigt selon un premier ou second sens dans une portion dépourvue d'imagette d'une zone d'affichage Zj.

Plusieurs agencements de l'écran EA peuvent être envisagés.

Un premier agencement est illustré non limitativement sur les figures 2 à 4. Dans ce premier agencement l'écran EA est subdivisé en au moins deux zones d'affichage Zj qui sont placées l'une à la suite de l'autre à un même niveau. Ce premier agencement est bien adapté au cas où l'écran EA est rectangulaire et installé selon une orientation de type « paysage » (avec son plus grand côté placé horizontalement).

Dans l'exemple illustré non limitativement sur la figure 2, l'écran EA présente un premier format de type paysage et est subdivisé en deux zones d'affichage Z1 et Z2 (j = 1 ou 2) sur lesquelles sont affichés respectivement des exemples de première P1 (k = 1) et quatrième P4 (k = 4) pages d'imagettes. Ici, la première page d'imagettes P1 comprend une seule imagette associée à une fonctionnalité F1, éventuellement dédiée à l'affichage d'une carte routière fournie par un dispositif d'aide à la navigation embarqué dans le véhicule V (temporairement ou de façon permanente). La quatrième page d'imagettes P4 comprend ici trois imagettes associées respectivement à trois fonctionnalités F8 à F10.

Dans l'exemple illustré non limitativement sur la figure 3, l'écran EA présente aussi le premier format et est aussi subdivisé en deux zones d'affichage Z1 et Z2 (j = 1 ou 2). Cet exemple correspond à l'état dans lequel se trouve l'écran de la figure 2 après qu'un passager (ici avant) ait provoqué le remplacement de la première page d'imagettes P1 par la deuxième page d'imagettes P2 (k = 2) dans la première zone d'affichage Z1, par exemple en ayant fait glisser sensiblement horizontalement l'un de ses doigts selon un premier sens dans une portion dépourvue d'imagette de la première zone d'affichage Z1. Ce premier sens va, par exemple ici, de la gauche vers la droite pour signaler que l'on veut passer d'une page n à une page n+1. On utilisera alors un second sens opposé au premier sens (et donc allant ici de la droite vers la gauche) pour signaler que l'on veut passer d'une page n+1 à une page n. La deuxième page d'imagettes P2 comprend ici quatre imagettes associées respectivement à quatre fonctionnalités F2 à F5.

Un passager pourrait de la même façon décider de remplacer la quatrième page d'imagettes P4 par une autre page d'imagettes P3 ou P5 dans la seconde zone d'affichage Z2, par exemple en ayant fait glisser sensiblement horizontalement l'un de ses doigts selon le second ou premier sens dans une portion dépourvue d'imagette de la seconde zone d'affichage Z2.

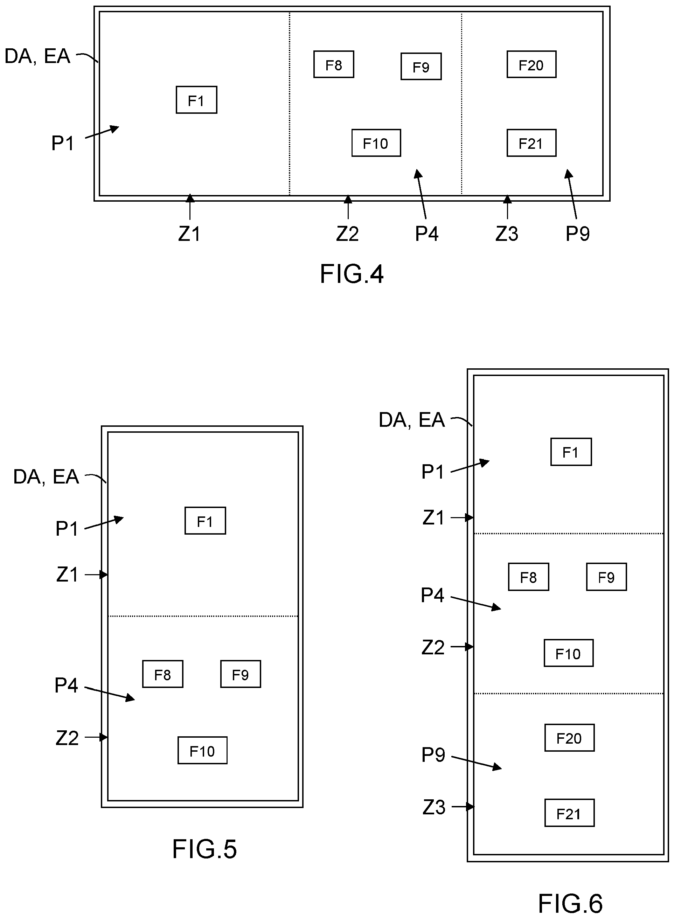

Dans l'exemple illustré non limitativement sur la figure 4, l'écran EA présente un second format de type paysage (plus allongé que le premier format suivant la direction horizontale) et est subdivisé en trois zones d'affichage Z1 à Z3 (j = 1 à 3) sur lesquelles sont affichés respectivement les première P1 et quatrième P4 pages d'imagettes présentées ci-avant et un exemple de neuvième page d'imagettes P9 (k = 9). La neuvième page d'imagettes P9 comprend ici deux imagettes associées respectivement à deux fonctionnalités F20 et F21.

On notera que l'on peut envisager qu'un écran EA ayant un format de type paysage soit subdivisé en plus de trois zones d'affichage Zj, et par exemple quatre ou cinq, voire plus.

Un deuxième agencement est illustré non limitativement sur les figures 5 et 6. Dans ce deuxième agencement l'écran EA est subdivisé en au moins deux zones d'affichage Zj qui sont placées l'une à la suite de l'autre à des niveaux différents. Ce deuxième agencement est bien adapté au cas où l'écran EA est rectangulaire et installé selon une orientation de type « portrait » (avec son plus grand côté placé verticalement).

Dans l'exemple illustré non limitativement sur la figure 5, l'écran EA présente un premier format de type portrait et est subdivisé en deux zones d'affichage Z1 et Z2 (j = 1 ou 2) sur lesquelles sont affichés respectivement les exemples de première P1 et quatrième P4 pages d'imagettes présentées ci-avant en référence aux figures 2 à 4.

Un passager (ici avant) pourrait décider de remplacer la première page d'imagettes P1 par la deuxième page d'imagettes P2 (présentée ci-avant) dans la première zone d'affichage Z1, par exemple en ayant fait glisser sensiblement verticalement l'un de ses doigts selon un premier sens dans une portion dépourvue d'imagette de la première zone d'affichage Z1. Ce premier sens va, par exemple ici, du haut vers le bas pour signaler que l'on veut passer d'une page n à une page n+1. On utilisera alors un second sens opposé au premier sens (et donc allant ici du bas vers le haut) pour signaler que l'on veut passer d'une page n+1 à une page n.

De même, un passager pourrait de la même façon décider de remplacer la quatrième page d'imagettes P4 par une autre page d'imagettes P3 ou P5 dans la seconde zone d'affichage Z2, par exemple en ayant fait glisser sensiblement verticalement l'un de ses doigts selon le second ou premier sens dans une portion dépourvue d'imagette de la seconde zone d'affichage Z2.

Dans l'exemple illustré non limitativement sur la figure 6, l'écran EA présente un second format de type portrait (plus allongé que le premier format suivant la direction verticale) et est subdivisé en trois zones d'affichage Z1 à Z3 (j = 1 à 3) sur lesquelles sont affichées respectivement les première P1, quatrième P4 et neuvième P9 pages d'imagettes présentées ci-avant.

On notera que l'on peut envisager qu'un écran EA ayant un format de type portrait soit subdivisé en plus de trois zones d'affichage Zj, et par exemple quatre ou cinq, voire plus.

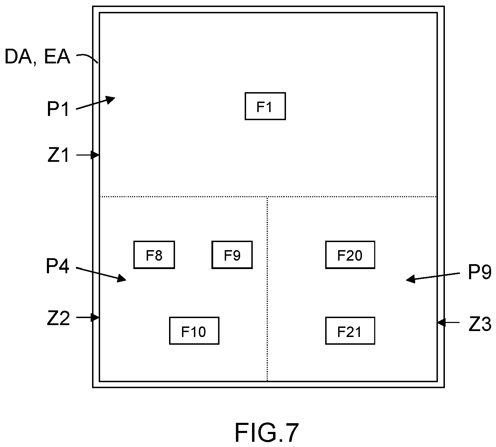

Un troisième agencement est illustré non limitativement sur la figure 7. Dans ce troisième agencement l'écran EA est subdivisé en au moins trois zones d'affichage Zj, au moins l'une d'entre elles étant placée à un premier niveau, et au moins deux autres d'entre elles étant placées l'une à côté de l'autre à un second niveau situé au-dessus ou en-dessous du premier niveau.

Dans l'exemple illustré non limitativement sur la figure 7, l'écran EA comprend une première zone d'affichage Z1 placée sur un premier niveau (ici le plus haut) et des deuxième Z2 et troisième Z3 zones d'affichage placées l'une à côté de l'autre sur un second niveau (ici le plus bas). Ici, les première Z1, deuxième Z2 et troisième Z3 zones d'affichage affichent respectivement les première P1, quatrième P4 et neuvième P9 pages d'imagettes présentées ci-avant. Mais d'autres configurations peuvent être envisagées, et notamment des première Z1 et deuxième Z2 zones d'affichage placées l'une à côté de l'autre sur le premier niveau (le plus haut) et une troisième zone d'affichage Z3 placée sur le second niveau (le plus bas).

On notera que l'on peut envisager qu'un écran EA ayant un troisième agencement comprenne plus de deux niveaux superposés les uns au-dessous des autres, chaque niveau comprenant alors au moins une zone d'affichage Zj.

On notera également que l'écran EA peut être subdivisé en zones d'affichage Zj ayant des dimensions identiques ou bien différentes. Ainsi, dans les exemples illustrés non limitativement sur les figures 2, 3, 5 et 6 les zones d'affichage Zj d'un même écran EA ont toutes des dimensions identiques. En revanche dans les exemples illustrés non limitativement sur les figures 4 et 7 les zones d'affichage Zj d'un même écran EA ont des dimensions différentes (au moins pour certaines d'entre elles).

On notera également que le véhicule V peut éventuellement assurer au moins une fonctionnalité d'assistance à la conduite (éventuellement de type ADAS (« Advanced Driver Assistance System »)). Dans ce cas, en cas d'activation d'une telle fonctionnalité d'assistance à la conduite et d'affichage d'une page d'imagette(s) Pk associée à cette fonctionnalité activée sur l'une des zones d'affichage Zj, le calculateur CA peut être agencé de manière à autoriser un remplacement de cette page d'imagette(s) Pk affichée par une autre page d'imagette(s) Pk' (k' ≠ k) seulement lorsque ce remplacement est requis par une action d'un passager qui a été préalablement reconnu en tant que conducteur du véhicule V. On comprendra en effet qu'un remplacement d'une telle page d'imagette(s) Pk par le passager avant pourrait s'avérer potentiellement dangereux pour la conduite du véhicule V. D'ailleurs, pour une raison de sécurité les fonctions de type ADAS ne sont habituellement pas (des)activables via l'écran central, seuls leur paramétrage et éventuellement la visualisation des aides à la conduite en cours sont généralement affichés sur l'écran central.

On notera que selon son agencement et/ou l'aménagement de l'habitacle H du véhicule V, le calculateur CA peut reconnaitre le conducteur ou le passager d'au moins une façon qui est choisie parmi une action prédéfinie sur l'écran EA, une identification visuelle par une caméra qui est implantée (ici) dans la partie avant PA de l'habitacle H, et une identification d'un identifiant d'équipement de communication préalablement enregistré.

Par exemple, l'action prédéfinie sur l'écran EA peut être un unique glissement sensiblement horizontal d'un doigt du conducteur sur quelques centimètres et selon un premier sens (par exemple de la gauche vers la droite dans le cas d'une conduite à gauche), ou bien deux glissements successifs sensiblement horizontaux d'un doigt du passager sur quelques centimètres et selon un second sens opposé au premier sens (par exemple de la droite vers la gauche dans le cas d'une conduite à gauche).

Egalement par exemple, la caméra peut être solidarisée à la face supérieure de la planche de bord PB ou au pare-brise ou encore au rétroviseur central intérieur, et être chargée d'observer le conducteur et le passager avant, éventuellement pour d'autres applications comme par exemple la détection de perte de vigilance ou la détection de présence. Dans ce cas, l'identification visuelle du conducteur peut, par exemple, se faire par la détection de sa présence sur le siège conducteur (ici situé à gauche), et l'identification visuelle du passager peut, par exemple, se faire par la détection de sa présence sur le siège passager (ici situé à droite). Le calculateur CA est alors informé de chaque personne détectée par la caméra, ce qui lui permet de reconnaitre le conducteur ou le passager en tant que tel.

Egalement par exemple, le véhicule V peut être équipé d'un dispositif de détection chargé de détecter la présence d'au moins un équipement de communication temporairement présent dans l'habitacle H. Un tel équipement de communication peut, par exemple, être un téléphone mobile intelligent (ou « smartphone ») ou une tablette électronique communicante. Cette détection nécessite que l'identifiant de l'équipement de communication ait été préalablement enregistré, par exemple lors d'une phase d'appairage contrôlée par la personne qui l'utilise, via l'écran EA. Cet identifiant peut, par exemple, être enregistré en correspondance du statut de la personne qui utilise l'équipement de communication correspondant, à savoir conducteur ou passager. Dans ce cas, le calculateur CA est informé de chaque identifiant détecté ou du fait que c'est le conducteur ou le passager qui a été détecté, ce qui lui permet de le reconnaitre en tant que tel.

On notera également qu'en cas d'activation d'une fonctionnalité d'assistance à la conduite du véhicule V gérée par un conducteur reconnu du véhicule V et d'affichage d'une page d'imagette(s) associée à cette fonctionnalité activée sur l'une des zones d'affichage Zj, le calculateur CA peut être agencé de manière à n'autoriser une modification d'un paramètre de cette fonctionnalité activée que par une action de ce conducteur reconnu. On comprendra en effet qu'une telle modification par le passager avant pourrait s'avérer potentiellement dangereuse pour la conduite du véhicule V. Comme indiqué précédemment, pour une raison de sécurité, les fonctions de type ADAS ne sont habituellement pas (des)activables via l'écran central.

On notera également qu'en cas d'activation d'une fonctionnalité gérée par un passager reconnu qui n'est pas un conducteur reconnu du véhicule V et d'affichage d'une page d'imagette(s) associée à cette fonctionnalité activée sur l'une des zones d'affichage Zj, le calculateur CA peut être agencé de manière à autoriser une modification d'un paramètre de cette fonctionnalité activée par une action de ce conducteur reconnu seulement lorsque la vitesse en cours du véhicule V est inférieure à un seuil prédéfini pendant que ce dernier (V) est dans une phase de conduite manuelle (et donc totalement contrôlé par son conducteur). On comprendra en effet qu'une telle modification par le conducteur impose qu'il cesse d'observer l'environnement devant son véhicule pendant toute sa durée et donc est potentiellement d'autant plus dangereuse pour la conduite du véhicule V que la vitesse de ce dernier (V) est élevée.

La notion de « fonctionnalité gérée par un passager » doit être ici comprise comme une fonctionnalité qu'il est préférable qu'un passager gère à la place du conducteur. On peut en effet répartir les fonctionnalités en trois groupes : celles qui sont générales et donc concernent à la fois le conducteur et le passager, celles qui concernent spécifiquement le conducteur et celles qui concernent spécifiquement le passager. Par exemple, les fonctionnalités générales peuvent être relatives au confort dans le véhicule V ou aux informations cartographiques (par exemple fournies par un dispositif d'aide à la navigation embarqué (temporairement ou de façon permanente) dans le véhicule V. Egalement par exemple, les fonctionnalités concernant spécifiquement le conducteur peuvent être relatives à la conduite et au fonctionnement du véhicule V (cela inclus par exemple les cartes routières). Egalement par exemple, les fonctionnalités concernant spécifiquement le passager peuvent être relatives au divertissement (musique, vidéo) ou au co-pilotage du véhicule V (y compris, par exemple, les informations associées aux cartes routières) ou encore à la télématique.

On notera également que sur la figure 1 les moyens de traitement (ou calcul) et de contrôle du dispositif d'affichage DA sont très schématiquement et fonctionnellement illustrés par le seul calculateur CA. Ce calculateur CA peut comprendre au moins un processeur de signal numérique (ou DSP (Digital Signal Processor)), éventuellement associé à une mémoire vive pour stocker des instructions pour la mise en oeuvre par ce processeur d'un programme informatique (ou logiciel (ou encore « software »)) ou de routines permettant de contrôler l'affichage de l'écran EA. Ce processeur de signal numérique reçoit des données qu'il analyse et utilise dans des calculs ou traitements, éventuellement après les avoir mises en forme et/ou démodulées et/ou amplifiées, de façon connue en soi. Par ailleurs, les moyens de traitement (ou calcul) et de contrôle du dispositif d'affichage DA peuvent comprendre un boitier comportant des circuits intégrés (ou imprimés), reliés par des connections filaires ou non filaires. On entend par circuit intégré (ou imprimé) tout type de dispositif apte à effectuer au moins une opération électrique ou électronique. De plus, ce dispositif d'affichage DA peut éventuellement comprendre une pluralité de processeurs, au moins une mémoire de masse, une interface d'entrée pour recevoir au moins les informations issues de l'écran EA (comme par exemple les mouvements de doigt détectés), et une interface de sortie pour la transmission des commandes d'affichage.

## Revendications

1. Dispositif d'affichage (DA) pour un véhicule (V) assurant des fonctionnalités et comprenant un habitacle (H) pouvant accueillir au moins un passager, ledit dispositif d'affichage (DA) comprenant i) un écran (EA) de type tactile, destiné à être installé dans ledit habitacle (H) dans une zone accessible audit passager, et configuré pour afficher des pages d'imagettes (Pk) représentatives desdites fonctionnalités et de commandes de ces dernières, et ii) au moins un calculateur (CA) configuré pour déclencher un accès à la fonctionnalité ou commande associée à une imagette touchée, ) ledit écran (EA) étant subdivisé en au moins deux zones d'affichage (Zj) voisines, et ii) ledit calculateur (CA) étant configuré pour contrôler l'affichage dans lesdites zones d'affichage (Zj) de pages d'imagette(s) (Pk) différentes choisies par au moins un passager par des actions dédiées respectivement sur ces zones d'affichage (Zj), **caractérisé en ce qu'**en cas d'activation d'une fonctionnalité d'assistance à la conduite dudit véhicule (V) et d'affichage d'une page d'imagette(s) associée à cette fonctionnalité activée sur l'une desdites zones d'affichage (Zj), ledit calculateur (CA) est configuré pour autoriser un remplacement de cette page d'imagette(s) affichée par une autre page d'imagette(s) seulement lorsque ce remplacement est requis par une action d'un passager reconnu en tant que conducteur dudit véhicule (V).

2. Dispositif selon la revendication 1, **caractérisé en ce que** lesdites actions dédiées sont choisies parmi une touche ponctuelle dans une portion dépourvue d'imagette d'une sous-partie droite ou gauche d'une zone d'affichage (Zj), une touche ponctuelle dans une portion dépourvue d'imagette d'une sous-partie haute ou basse d'une zone d'affichage (Zj), un glissement horizontal d'un doigt selon un premier ou second sens dans une portion dépourvue d'imagette d'une zone d'affichage (Zj), et un glissement vertical d'un doigt selon un premier ou second sens dans une portion dépourvue d'imagette d'une zone d'affichage (Zj).

3. Dispositif selon la revendication 1 ou 2, **caractérisé en ce que** ledit écran (EA) est subdivisé en au moins deux zones d'affichage (Zj) placées l'une à la suite de l'autre à un même niveau.

4. Dispositif selon la revendication 1 ou 2, **caractérisé en ce que** ledit écran (EA) est subdivisé en au moins deux zones d'affichage (Zj) placées l'une à la suite de l'autre à des niveaux différents.

5. Dispositif selon la revendication 1 ou 2, **caractérisé en ce que** ledit écran (EA) est subdivisé en au moins trois zones d'affichage (Zj), au moins l'une d'entre elles étant placée à un premier niveau, et au moins deux autres d'entre elles étant placées l'une à côté de l'autre à un second niveau situé au-dessus ou en-dessous dudit premier niveau.

6. Dispositif selon l'une des revendications 1 à 5, **caractérisé en ce que** ledit écran (EA) est subdivisé en zones d'affichage (Zj) ayant des dimensions différentes.

7. Dispositif selon l'une des revendications 1 à 6, **caractérisé en ce qu'**en cas d'activation d'une fonctionnalité d'assistance à la conduite dudit véhicule (V) gérée par un conducteur reconnu dudit véhicule (V) et d'affichage d'une page d'imagette(s) associée à cette fonctionnalité activée sur l'une desdites zones d'affichage (Zj), ledit calculateur (CA) est configuré pour n'autoriser une modification d'un paramètre de cette fonctionnalité activée que par une action de ce conducteur reconnu.

8. Dispositif selon l'une des revendications 1 à 7, **caractérisé en ce qu'**en cas d'activation d'une fonctionnalité gérée par un passager reconnu qui n'est pas un conducteur reconnu dudit véhicule (V) et d'affichage d'une page d'imagette(s) associée à cette fonctionnalité activée sur l'une desdites zones d'affichage (Zj), ledit calculateur (CA) est configuré pour autoriser une modification d'un paramètre de cette fonctionnalité activée par une action de ce conducteur reconnu seulement lorsqu'une vitesse en cours dudit véhicule (V) est inférieure à un seuil prédéfini pendant que ce dernier (V) est dans une phase de conduite manuelle.

9. Véhicule (V) assurant des fonctionnalités et comprenant un habitacle (H) pouvant accueillir au moins un passager, **caractérisé en ce qu'**il comprend en outre au moins un dispositif d'affichage (DA) selon l'une des revendications précédentes, installé dans l'habitacle (H).

## Patentansprüche

1. Anzeigevorrichtung (DA) für ein Fahrzeug (V), das Funktionalitäten gewährleistet und einen Fahrgastraum (H) umfasst, der mindestens einen Fahrgast aufnehmen kann, wobei die Anzeigevorrichtung (DA) i) einen Bildschirm (EA) vom Typ Touchscreen umfasst, der dazu bestimmt ist, in dem Fahrgastraum (H) in einem für den Fahrgast zugänglichen Bereich installiert zu werden, und so konfiguriert ist, dass er Seiten mit Miniaturbildern (Pk) anzeigt, die für die genannten Funktionalitäten und deren Befehle repräsentativ sind, und ii) mindestens einen Rechner (CA), der so konfiguriert ist, dass er einen Zugriff auf die Funktionalität oder den Befehl auslöst, der mit einem berührten Miniaturbild verbunden ist, wobei der Bildschirm (EA) in mindestens zwei benachbarte Anzeigebereiche (Zj) unterteilt ist, und ii) der Rechner (CA) so konfiguriert ist, dass er die Anzeige in den Anzeigezonen (Zj) von unterschiedlichen Miniaturbildseiten (Pk) steuert, die von mindestens einem Fahrgast durch dedizierte Aktionen jeweils auf diesen Anzeigezonen (Zj) ausgewählt werden, **dadurch gekennzeichnet, dass** im Fall der Aktivierung einer Funktion zur Unterstützung des Fahrers des Fahrzeugs (V) und der Anzeige einer Miniaturbildseite(n), die mit dieser aktivierten Funktion verbunden ist, auf einer der Anzeigezonen (Zj), der Rechner (CA) so konfiguriert ist, dass er einen Austausch dieser angezeigten Miniaturbildseite(n) durch eine andere Miniaturbildseite(n) nur dann zulässt, wenn dieser Austausch durch eine Aktion eines als Fahrer des Fahrzeugs (V) erkannten Passagiers erforderlich ist.

2. Vorrichtung nach Anspruch 1, **dadurch gekennzeichnet, dass** die dedizierten Aktionen ausgewählt sind aus einer punktuellen Berührung in einem Abschnitt ohne Miniaturbild eines rechten oder linken Unterabschnitts eines Anzeigebereichs (Zj), einer punktuellen Berührung in einem Abschnitt ohne Miniaturbild eines oberen oder unteren Unterabschnitts eines Anzeigebereichs (Zj), ein horizontales Gleiten eines Fingers in einer ersten oder zweiten Richtung in einem Teil eines Anzeigebereichs (Zj), der keine Miniaturansicht aufweist, und ein vertikales Gleiten eines Fingers in einer ersten oder zweiten Richtung in einem Teil eines Anzeigebereichs (Zj), der keine Miniaturansicht aufweist.

3. Vorrichtung nach Anspruch 1 oder 2, **dadurch gekennzeichnet, dass** der Bildschirm (EA) in mindestens zwei Anzeigebereiche (Zj) unterteilt ist, die auf derselben Ebene hintereinander angeordnet sind.

4. Vorrichtung nach Anspruch 1 oder 2, **dadurch gekennzeichnet, dass** der Bildschirm (EA) in mindestens zwei Anzeigebereiche (Zj) unterteilt ist, die hintereinander auf verschiedenen Ebenen angeordnet sind.

5. Vorrichtung nach Anspruch 1 oder 2, **dadurch gekennzeichnet, dass** der Bildschirm (EA) in mindestens drei Anzeigebereiche (Zj) unterteilt ist, wobei mindestens einer davon auf einer ersten Ebene angeordnet ist und mindestens zwei weitere davon nebeneinander auf einer zweiten Ebene angeordnet sind, die sich über oder unter der ersten Ebene befindet.

6. Vorrichtung nach einem der Ansprüche 1 bis 5, **dadurch gekennzeichnet, dass** der Bildschirm (EA) in Anzeigebereiche (Zj) mit unterschiedlichen Abmessungen unterteilt ist.

7. Vorrichtung nach einem der Ansprüche 1 bis 6, **dadurch gekennzeichnet, dass** im Fall der Aktivierung einer Funktion zur Unterstützung des Fahrens des Fahrzeugs (V), die von einem anerkannten Fahrer des Fahrzeugs (V) verwaltet wird, und der Anzeige einer Seite mit Miniaturbild(ern), die dieser aktivierten Funktion zugeordnet ist, in einer der Anzeigezonen (Zj) der Rechner (CA) so konfiguriert ist, dass er eine Änderung eines Parameters dieser aktivierten Funktion nur durch eine Aktion dieses anerkannten Fahrers zulässt.

8. Vorrichtung nach einem der Ansprüche 1 bis 7, **dadurch gekennzeichnet, dass** im Fall der Aktivierung einer Funktionalität, die von einem erkannten Passagier verwaltet wird, der kein erkannter Fahrer des Fahrzeugs (V) ist, und der Anzeige einer Seite mit Miniaturbild(ern), die dieser aktivierten Funktionalität zugeordnet ist, auf einer der Anzeigezonen (Zj), der Rechner (CA) so konfiguriert ist, dass er eine Änderung eines Parameters dieser aktivierten Funktionalität durch eine Aktion dieses anerkannten Fahrers nur dann zulässt, wenn eine aktuelle Geschwindigkeit des Fahrzeugs (V) unter einem vordefinierten Schwellenwert liegt, während sich das Fahrzeug (V) in einer manuellen Fahrphase befindet.

9. Fahrzeug (V), das Funktionalitäten gewährleistet und einen Fahrgastraum (H) umfasst, der mindestens einen Fahrgast aufnehmen kann, **dadurch gekennzeichnet, dass** es ferner mindestens eine Anzeigevorrichtung (DA) nach einem der vorhergehenden Ansprüche umfasst, die im Fahrgastraum (H) installiert ist.

## Claims

1. Display device (DA) for a vehicle (V) providing functionalities and comprising a passenger compartment (H) able to accommodate at least one passenger, said display device (DA) comprising i) a screen (EA) of the touch type, intended to be installed in said passenger compartment (H) in an area accessible to said passenger and configured to display pages of thumbnails (Pk) representative of said functionalities and of commands for the latter, and ii) at least one computer (CA) configured to trigger access to the functionality or command associated with a touched thumbnail, said screen (EA) being subdivided into at least two neighbouring display areas (Zj) and ii) said computer (CA) being configured to control the display in said display zones (Zj) of different thumbnail pages (Pk) chosen by at least one passenger by dedicated actions respectively on these display zones (Zj), **characterised in that** in the event of activation of a functionality for assisting the driving of said vehicle (V) and display of a thumbnail page associated with this activated functionality on one of said display zones (Zj) said computer (CA) is configured to authorize a replacement of this displayed thumbnail page(s) by another thumbnail page(s) only when this replacement is required by an action of a passenger recognized as a driver of said vehicle (V).

2. A device according to claim 1, **characterized in that** said dedicated actions are selected from a point touch in a thumbnail-free portion of a right or left subpart of a display area (Zj), a point touch in a thumbnail-free portion of a top or bottom subpart of a display area (Zj), a horizontal sliding of a finger in a first or second direction in a thumbnail-free portion of a display area (Zj), and a vertical sliding of a finger in a first or second direction in a thumbnail-free portion of a display area (Zj).

3. A device according to claim 1 or 2, **characterized in that** said screen (EA) is subdivided into at least two display areas (Zj) placed one after the other at a same level.

4. Device according to claim 1 or 2, **characterized in that** said screen (EA) is subdivided into at least two display areas (Zj) placed one after the other at different levels.

5. Device according to claim 1 or 2, **characterized in that** said screen (EA) is subdivided into at least three display areas (Zj), at least one of them being placed at a first level, and at least two others of them being placed next to each other at a second level located above or below said first level.

6. Device according to any of claims 1 to 5, **characterized in that** said screen (EA) is subdivided into display areas (Zj) having different dimensions.

7. Device according to one of claims 1 to 6, **characterised in that** in the event of activation of a driving assistance functionality of the said vehicle (V) managed by a recognised driver of the said vehicle (V) and display of a page of thumbnail(s) associated with this activated functionality on one of the said display zones (Zj), the said computer (CA) is configured to authorise a modification of a parameter of this activated functionality only by an action of this recognised driver.

8. Device according to one of claims 1 to 7, **characterised in that** in the event of activation of a functionality managed by a recognised passenger who is not a recognised driver of the said vehicle (V) and display of a page of thumbnail(s) associated with this activated functionality on one of the said display zones (Zj), said computer (CA) is configured to authorise a modification of a parameter of this activated functionality by an action of this recognised driver only when a current speed of said vehicle (V) is below a predefined threshold while the latter (V) is in a manual driving phase.

9. Vehicle (V) providing functionalities and comprising a passenger compartment (H) able to accommodate at least one passenger, **characterised in that** it further comprises at least one display device (DA) according to one of the preceding claims, installed in the passenger compartment (H).
